# EUROPEAN PATENT APPLICATION

(11) **EP 4 691 827 A1**
(43) Date of publication of application: **11.02.2026**
(21) Application number: 24779072.8
(22) Date of filing: 01.03.2024
(51) Int. Cl.: B60L 3/00, B60L 7/14, B60L 9/18, B60L 58/12, H02J 7/00

(54) **DUMP TRUCK**

(30) Priority: 30.03.2023 JP 2023054655
(71) Applicant: Hitachi Construction Machinery Co., Ltd., Tokyo 110-0015 (JP)
(72) Inventor: ABE, Yuusuke, Tsuchiura-shi, Ibaraki 300-0013 (JP); KANEZAWA, Hiroshi, Tsuchiura-shi, Ibaraki 300-0013 (JP); IKEDA, Jun, Tsuchiura-shi, Ibaraki 300-0013 (JP); NAKATE, Youhei, Tsuchiura-shi, Ibaraki 300-0013 (JP); SAIJOU, Kimihiro, Tsuchiura-shi, Ibaraki 300-0013 (JP); KIMURA, Takuya, Tsuchiura-shi, Ibaraki 300-0013 (JP); LI, Zhi, Tsuchiura-shi, Ibaraki 300-0013 (JP); KANAYA, Yousuke, Tsuchiura-shi, Ibaraki 300-0013 (JP); SUZUKI, Shoutarou, Tsuchiura-shi, Ibaraki 300-0013 (JP); MURAYAMA, Yuuji, Tsuchiura-shi, Ibaraki 300-0013 (JP); HONDA, Takeshi, Tsuchiura-shi, Ibaraki 300-0013 (JP)
(74) Representative: MERH-IP Matias Erny Reichl Hoffmann Patentanwälte PartG mbB
(86) International application number: PCT/JP2024/007804
(87) International publication number: WO 2024/202934

(57) **Abstract**

Provided is an electric dump truck capable of stabilizing a DC voltage generated between a battery as a power source of a travel motor and an inverter that drives the travel motor. A dump truck 1 includes a battery 2, travel motors 9, 10, inverters 7, 8, a DC/DC converter 3, a smoothing capacitor 5, a battery control device 6, and a vehicle control device 11. The battery control device 6 computes a chargeable and dischargeable power of the battery 2 on the basis of a state of charge of the battery 2. The vehicle control device 11 acquires an operation signal corresponding to an acceleration/deceleration operation to the travel motors 9, 10, and computes a torque command value to be output to the inverters 7, 8 on the basis of the acquired operation signal and the chargeable and dischargeable power computed by the battery control device 6.

## Description

### Technical Field

The present invention relates to an electric dump truck using a battery as a power source.

### Background Art

In the electric dump truck, it is important to control the power balance of the battery such that the power consumption of the travel motor during power traveling and the power generated during regeneration (hereinafter also referred to as "regenerative power") will not exceed the limits of the chargeable and dischargeable power of the battery. Patent Literature 1 is known as the background art related to such a type of control.

Patent Literature 1 discloses a vehicle control device mounted on a vehicle provided with an internal combustion engine, motor generators, a battery, a DC/DC converter, and inverters. The vehicle control device disclosed in Patent Literature 1 limits the power generated or the power consumed by the motor generator to be less than or equal to the upper limit of the output power of the battery.

### Citation List

### Patent Literature

Patent Literature 1: JP 6350031 B

### Summary of Invention

### Technical Problem

The electric dump truck includes a capacitor for smoothing voltage (hereinafter also referred to as a "smoothing capacitor") between the DC/DC converter that reduces or increases the input/output voltage of the battery as the power source of the travel motor and the inverter that drives the travel motor. If the regenerative power of the travel motor exceeds the power that can be charged in the battery, the DC voltage of the smoothing capacitor excessively increases (hereinafter also referred to as an "overvoltage state"), causing damage to a component. Meanwhile, if the power consumption of the travel motor during power traveling exceeds the power that can be discharged from the battery, the DC voltage of the smoothing capacitor excessively decreases (hereinafter also referred to as an "undervoltage state"), causing a decrease in the input voltage of the inverter. The decrease in the input voltage of the inverter may cause unstable control of the inverter and the travel motor, leading to a stop of the travel system.

Patent Literature 1 discloses a technique for limiting the power generated or the power consumed by the motor generator to be less than or equal to the upper limit of the output power of the battery in order to suppress component breakdown due to overcurrent only in the vehicle including the internal combustion engine. The technique disclosed in Patent Literature 1 does not take any consideration for application to the electric dump truck that does not include the internal combustion engine, and there is room for improvement in stabilizing the DC voltage generated in the electric dump truck.

In view of the above circumstances, it is an object of the present invention to provide an electric dump truck capable of stabilizing the DC voltage generated between the battery as the power source of the travel motor and the inverter that drives the travel motor.

### Solution to Problem

To solve the above problem, the dump truck of the present invention is a dump truck of an electric type including: a battery; a travel motor using the battery as a power source; an inverter configured to generate a driving voltage of the travel motor; a DC/DC converter configured to reduce or increase an input/output voltage of the battery; a capacitor provided between the DC/DC converter and the inverter; a battery control device configured to monitor a state of charge of the battery; and a vehicle control device configured to output a torque command value of the travel motor to the inverter to control driving of the travel motor. The battery control device computes a chargeable and dischargeable power of the battery on the basis of the state of charge. The vehicle control device acquires an operation signal corresponding to an acceleration/deceleration operation to the travel motor and computes the torque command value to be output to the inverter on the basis of the acquired operation signal and the chargeable and dischargeable power computed by the battery control device. A maximum power consumption value that indicates a maximum value of a power consumption consumed by the travel motor during power traveling and a maximum regenerative power value that indicates a maximum value of a regenerative power generated by the travel motor during regeneration are set in advance in the vehicle control device. The battery control device computes a dischargeable power indicating a power that can be discharged from the battery and a chargeable power indicating a power that can be charged in the battery. The vehicle control device is configured to: when the dischargeable power is less than the maximum power consumption value, limit the torque command value such that the power consumption of the travel motor will not exceed the dischargeable power; and when the chargeable power is less than the maximum regenerative power value, limit the torque command value such that the regenerative power of the travel motor will not exceed the chargeable power.

### Advantageous Effects of Invention

According to the present invention, it is possible to provide an electric dump truck capable of stabilizing the DC voltage generated between the battery as the power source of the travel motor and the inverter that drives the travel motor.

### Brief Description of Drawings

Fig. 1 is a view illustrating an appearance of a dump truck.
Fig. 2 is a diagram illustrating a configuration of an electric circuit of the dump truck of Embodiment 1.
Fig. 3 is a schematic diagram illustrating an operation of a vehicle control device illustrated in Fig. 2.
Fig. 4 is a diagram illustrating a computational logic associated with a torque command value in the vehicle control device illustrated in Fig. 2.
Fig. 5 is a diagram illustrating a computational logic associated with a torque rate illustrated in Fig. 4.
Fig. 6 is a diagram explaining a maximum power consumption value and a maximum regenerative power value illustrated in Fig. 5.
Fig. 7 is a diagram illustrating a configuration of an electric circuit of a dump truck of Embodiment 2.
Fig. 8 is a diagram illustrating a computational logic associated with a torque rate of the vehicle control device illustrated in Fig. 7.

### Description of Embodiments

Hereinafter, embodiments of the present invention will be described with reference to the drawings. Parts denoted by identical reference signs in the embodiments have similar functions in the embodiments unless particularly specified otherwise, and description thereof will be omitted.

### [Embodiment 1]

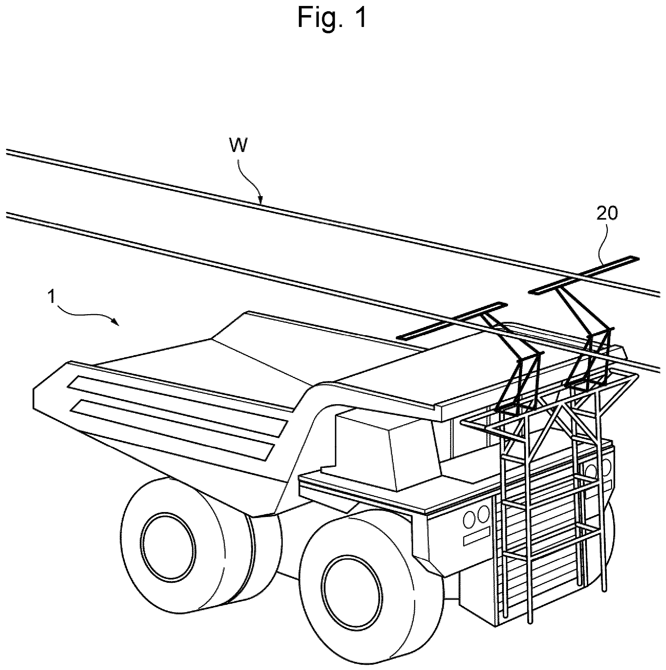

Referring to Fig. 1 to Fig. 6, a dump truck 1 of Embodiment 1 will be described. Fig. 1 is a view illustrating an appearance of the dump truck 1.

The dump truck 1 is an electric dump truck using a battery 2 as a power source. The dump truck 1 is a dump truck (mining truck) that hauls earth and sand or minerals and the like excavated in a strip mine, for example. The dump truck 1 may also be a dump truck supplied with power by a trolley overhead wire W connected to an electric power generation facility. The dump truck 1 may include a power reception device such as a pantograph 20 connected to the trolley overhead wire W.

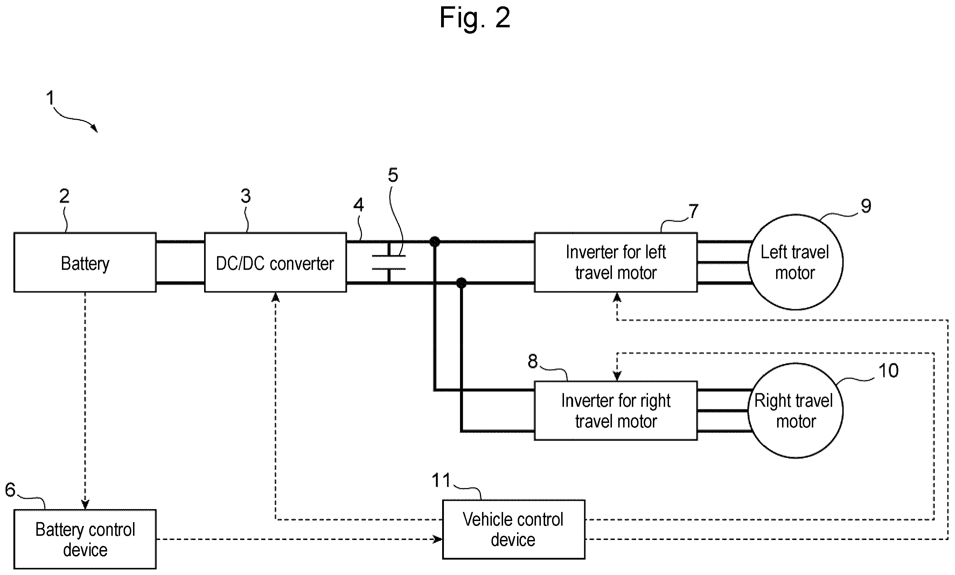

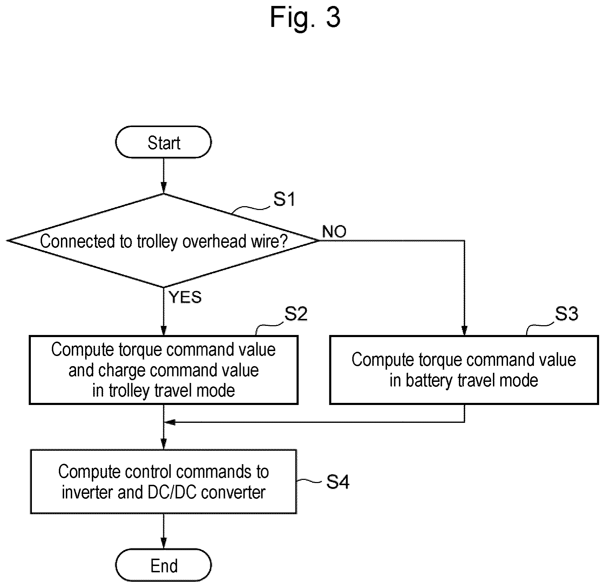

Fig. 2 is a diagram illustrating a configuration of an electric circuit of the dump truck 1 of Embodiment 1. Fig. 3 is a schematic diagram illustrating an operation of a vehicle control device 11 illustrated in Fig. 2.

The dump truck 1 includes the battery 2, a DC/DC converter 3, a smoothing capacitor 5, a battery control device 6, inverters 7, 8, travel motors 9, 10, and the vehicle control device 11.

The battery 2 is a power source of the travel motors 9, 10. The battery 2 is connected to the inverters 7, 8 that drive the travel motors 9, 10 via a DC circuit 4. The battery 2 discharges power during power traveling of the travel motors 9, 10 or charges power during regeneration of the travel motors 9, 10.

The DC/DC converter 3 is an electric power converter that reduces or increases the input/output voltage of the battery 2. The DC/DC converter 3 is provided on the DC circuit 4 that connects the battery 2 and the inverters 7, 8. The DC/DC converter 3 increases the output voltage of the battery 2 and outputs it to the DC circuit 4. The DC/DC converter 3 reduces the voltage of the DC circuit 4 and outputs it to the battery 2.

The DC/DC converter 3 operates based on a control command from the vehicle control device 11. For example, the DC/DC converter 3 maintains the voltage of the DC circuit 4 constant based on a DC voltage command value from the vehicle control device 11. Since the voltage of the DC circuit 4 decreases during power traveling of the travel motors 9, 10, the DC/DC converter 3 maintains the voltage of the DC circuit 4 constant by allowing the battery 2 to discharge. Since the voltage of the DC circuit 4 increases during regeneration of the travel motors 9, 10, the DC/DC converter 3 maintains the voltage of the DC circuit 4 constant by allowing the battery 2 to charge.

The smoothing capacitor 5 is provided on the DC circuit 4 between the DC/DC converter 3 and the inverters 7, 8. The smoothing capacitor 5 smooths the voltage of the DC circuit 4.

The travel motors 9, 10 are motors for traveling that rotate drive wheels of the dump truck 1. The travel motors 9, 10 are electric motors using the battery 2 as a power source. The travel motors 9, 10 are AC motors, connected to the inverters 7, 8. The travel motors 9, 10 include a left travel motor 9 for rotating drive wheels of the dump truck 1 on the left side and a right travel motor 10 for rotating drive wheels of the dump truck 1 on the right side. The left travel motor 9 is connected to the inverter 7 for the left travel motor. The right travel motor 10 is connected to the inverter 8 for the right travel motor.

The inverters 7, 8 are electric power converters that generate voltage for driving the travel motors 9, 10. The inverters 7, 8 are connected to the DC circuit 4 that is connected to the DC/DC converter 3. The inverters 7, 8 convert the DC voltage of the DC circuit 4 to a three-phase alternating current voltage and output the converted alternating current voltage to the travel motors 9, 10 as a driving voltage. The inverters 7, 8 convert the three-phase alternating current voltage output from the travel motors 9, 10 to a DC voltage and output the DC voltage to the DC circuit 4. The inverters 7, 8 include the inverter 7 for the left travel motor for driving the left travel motor 9 and the inverter 8 for the right travel motor for driving the right travel motor 10.

The inverters 7, 8 operate based on a control command from the vehicle control device 11. For example, the inverters 7, 8, on the basis of a torque command value from the vehicle control device 11, adjust the output voltage (i.e., driving voltage) to the travel motors 9, 10 to allow the travel motors 9, 10 to rotate by torque according to the torque command value.

The battery control device 6 monitors a state of charge of the battery 2. The battery control device 6 computes a chargeable and dischargeable power of the battery 2 on the basis of the state of charge of the battery 2. The chargeable and dischargeable power of the battery 2 includes a dischargeable power indicating a power that can be discharged from the battery 2 and a chargeable power indicating a power that can be charged in the battery 2. The dischargeable power indicates a maximum value (unit: kW) of the power that the entire battery 2 can instantaneously (per unit time) discharge when the battery 2 discharges. The chargeable power indicates a maximum value (unit: kW) of the power that the entire battery 2 can instantaneously (per unit time) charge when the battery 2 charges.

As common properties of the battery 2, the upper limit of the chargeable and dischargeable current changes according to a charge rate of the battery 2. A low charge rate reduces the upper limit of the dischargeable current, whereas a high charge rate reduces the upper limit of the chargeable current. The battery control device 6 can compute a dischargeable power by multiplying the dischargeable current according to the charge rate of the battery 2 by the terminal voltage of the battery 2. The battery control device 6 can compute a chargeable power by multiplying the chargeable current according to the charge rate of the battery 2 by the terminal voltage of the battery 2.

The battery 2 is configured to include a plurality of secondary battery units connected in parallel, and to be operable even when any secondary battery unit malfunctions. The battery control device 6 can compute a dischargeable power or a chargeable power of the entire battery 2 from a dischargeable power or a chargeable power of each secondary battery unit and the number of operable units. The battery control device 6 outputs the computed dischargeable power or chargeable power of the entire battery 2 to the vehicle control device 11 via an in-vehicle network of the dump truck 1. The battery control device 6 outputs the computed dischargeable power or chargeable power to the vehicle control device 11 at constant cycles.

The vehicle control device 11 is a controller that has control over the travel of the dump truck 1. The vehicle control device 11 includes a processor and a memory and realizes a travel function of the dump truck 1 by the processor implementing a program stored in the memory.

The vehicle control device 11 can cause the dump truck 1 to travel in different travel modes depending on the connection state between the pantograph 20 and the trolley overhead wire W. For example, the vehicle control device 11 determines, as illustrated in Fig. 3, whether the pantograph 20 is connected to the trolley overhead wire W (step S1). If the pantograph 20 is connected to the trolley overhead wire W, the vehicle control device 11 causes the dump truck 1 to travel in a trolley travel mode (step S2). If the pantograph 20 is not connected to the trolley overhead wire W, the vehicle control device 11 causes the dump truck 1 to travel in a battery travel mode (step S3). Then, the vehicle control device 11 computes each control command to the inverters 7, 8 and the DC/DC converter 3, and outputs the computed control commands to the inverters 7, 8 and the DC/DC converter 3, respectively (step S4).

The trolley travel mode is a travel mode in which driving of the travel motors 9, 10 and charging to the battery 2 are performed using the power supplied from the electric power generation facility to the trolley overhead wire W. The battery travel mode is a travel mode in which driving of the travel motors 9, 10 is performed using the power charged in the battery 2. Whichever travel mode is used, the vehicle control device 11 acquires an operation signal corresponding to an acceleration/deceleration operation to the travel motors 9, 10, for example, an operation signal indicating an operator's operation amount of an accelerator pedal or a retarder (brake) pedal of the dump truck 1. Then, the vehicle control device 11 computes a wheel torque as a target value from the acquired operation signal and a wheel speed, and computes a torque command value to be output to the inverters 7, 8. The electric power generation facility connected to the trolley overhead wire W has a sufficient power supply capability to the motor output of the travel motors 9, 10. Meanwhile, the battery 2 has a dischargeable power and a chargeable power that may change depending on the charge rate or malfunction status of the battery 2. Thus, in the battery travel mode, it is important for the vehicle control device 11 to compute a torque command value by which the travel motors 9, 10 can be properly driven while taking into consideration the dischargeable power and the chargeable power of the battery 2.

Then, the vehicle control device 11 limits the torque command value on the basis of the chargeable and dischargeable power computed by the battery control device 6. That is, the vehicle control device 11 acquires the operation signal corresponding to the acceleration/deceleration operation to the travel motors 9, 10, and computes the torque command value to be output to the inverters 7, 8 on the basis of the acquired operation signal and the chargeable and dischargeable power of the battery 2 computed by the battery control device 6.

Specifically, a maximum power consumption value that indicates a maximum value of the power consumption consumed by the travel motors 9, 10 during power traveling and a maximum regenerative power value that indicates a maximum value of the regenerative power generated by the travel motors 9, 10 during regeneration are set in advance in the vehicle control device 11. If the dischargeable power computed by the battery control device 6 is less than the preset maximum power consumption value, the vehicle control device 11 limits the torque command value such that the power consumption of the travel motors 9, 10 will not exceed the dischargeable power. If the chargeable power computed by the battery control device 6 is less than the preset maximum regenerative power value, the vehicle control device 11 limits the torque command value such that the regenerative power of the travel motors 9, 10 will not exceed the chargeable power.

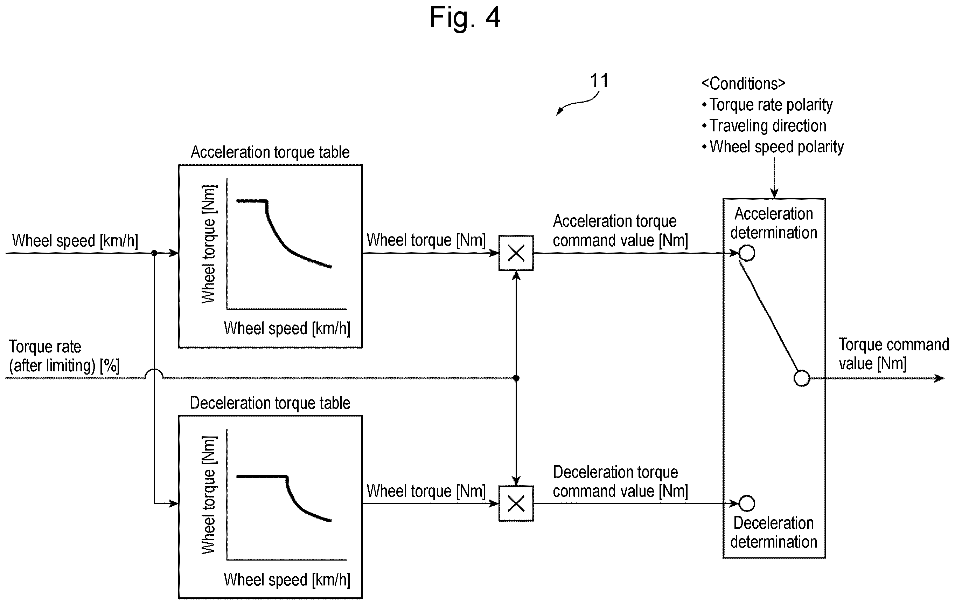

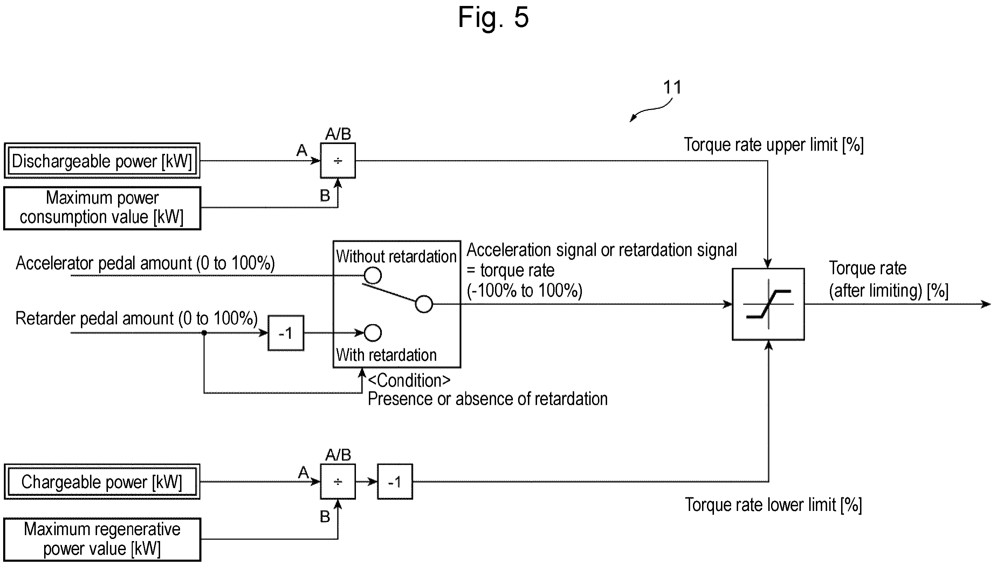

Referring to Fig. 4 and Fig. 5, a method of limiting the torque command value by the vehicle control device 11 will be described in detail. Fig. 4 is a diagram illustrating a computational logic associated with the torque command value in the vehicle control device 11 illustrated in Fig. 2. Fig. 5 is a diagram illustrating a computational logic associated with the torque rate illustrated in Fig. 4.

The vehicle control device 11 acquires an operation signal corresponding to an acceleration/deceleration operation to the travel motors 9, 10. The operation signal corresponding to the acceleration/deceleration operation indicates an operation amount of the acceleration/deceleration operation. For example, the operation signal corresponding to the acceleration/deceleration operation is an operation signal indicating an operator's operation amount of the accelerator pedal or the retarder pedal of the dump truck 1.

As illustrated in Fig. 4, a table (hereinafter also referred to as a "torque table") indicating a corresponding relationship between the wheel speed of the dump truck 1 or the rotation speed of the travel motors 9, 10 and the wheel torque of the dump truck 1 is set in advance in the vehicle control device 11. The torque table includes an acceleration torque table used during acceleration of the dump truck 1 and a deceleration torque table used during deceleration of the dump truck 1. The vehicle control device 11 specifies the wheel torque corresponding to the wheel speed using the torque table. The vehicle control device 11 computes a torque command value by multiplying the specified wheel torque by a rate (hereinafter also referred to as a "torque rate") corresponding to the operation amount of the acceleration/deceleration operation indicated by the acquired operation signal.

Specifically, as illustrated in Fig. 4, the vehicle control device 11 computes an acceleration torque command value by multiplying the wheel torque specified using the acceleration torque table by the torque rate, and computes a deceleration torque command value by multiplying the wheel torque specified using the deceleration torque table by the torque rate. Then, the vehicle control device 11 determines whether to output the acceleration torque command value or the deceleration torque command value under the determination conditions including the polarity of the torque rate (positive: power traveling, negative: regeneration), a traveling direction of the dump truck 1, and the polarity of the wheel speed, and the like. Then, the vehicle control device 11 outputs a command value according to the result of determination as the torque command value to the inverters 7, 8.

The torque rate indicates the rate of the torque command value with respect to the wheel torque specified using the torque table. In the present embodiment, the vehicle control device 11 limits the torque command value by limiting the torque rate on the basis of the dischargeable power and the chargeable power computed by the battery control device 6. That is, the vehicle control device 11 sets an upper limit of the torque rate on the basis of the dischargeable power computed by the battery control device 6 and the preset maximum power consumption value. The vehicle control device 11 sets a lower limit of the torque rate on the basis of the chargeable power computed by the battery control device 6 and the preset maximum regenerative power value.

Specifically, as illustrated in Fig. 5, the vehicle control device 11 computes the upper limit of the torque rate by dividing the dischargeable power computed by the battery control device 6 by the preset maximum power consumption value. The vehicle control device 11 computes the lower limit of the torque rate by dividing the chargeable power computed by the battery control device 6 by the preset maximum regenerative power value. The vehicle control device 11 sets the computed upper limit and lower limit of the torque rate.

Now consider the case where, for example, during acceleration of the dump truck 1, the battery 2 is in a healthy state (a state where there is no malfunction and the charge rate is not low) and the dischargeable power of the battery 2 is 1900 kW, and the maximum power consumption value of the travel motors 9, 10 is 1800 kW. In this case, the vehicle control device 11 obtains that the upper limit of the torque rate is (1900/1800)×100≈105%. Now consider the case where the charge rate of the battery 2 is in a low state, the dischargeable power of the battery 2 is 1500 kW, and the maximum power consumption value of the travel motors 9, 10 is 1800 kW. In this case, the vehicle control device 11 obtains that the upper limit of the torque rate is (1500/1800)×100≈83%. Now consider the case where the secondary battery unit, which is a part of the battery 2, is in a malfunction state, the dischargeable power of the battery 2 is 1200 kW, and the maximum power consumption value of the travel motors 9, 10 is 1800 kW. In this case, the vehicle control device 11 obtains that the upper limit of the torque rate is (1200/1800)×100≈66%.

After setting the upper limit and lower limit of the torque rate, the vehicle control device 11 assumes that the torque rate has been input and compares an acceleration signal that is an operation signal indicating an operator's operation amount of the accelerator pedal or a retardation signal that is an operation signal indicating an operator's operation amount of the retarder pedal with the set upper limit and lower limit of the torque rate. The operation amount of the accelerator pedal or the retarder pedal is expressed such that a full depression amount is 100% when the accelerator pedal or the retarder pedal is depressed at a maximum level.

When the acceleration signal or the retardation signal is within the range between the set upper limit and lower limit of the torque rate, the vehicle control device 11 employs the acceleration signal or the retardation signal as the torque rate by which the wheel torque illustrated in Fig. 4 is to be multiplied. Meanwhile, when the acceleration signal or the retardation signal exceeds the set upper limit or lower limit, the vehicle control device 11 employs the upper limit or lower limit of the torque rate, which the acceleration signal or the retardation signal exceeds, as the torque rate by which the wheel torque illustrated in Fig. 4 is to be multiplied. The vehicle control device 11 computes a torque command value by multiplying the employed torque rate by the wheel torque illustrated in Fig. 4.

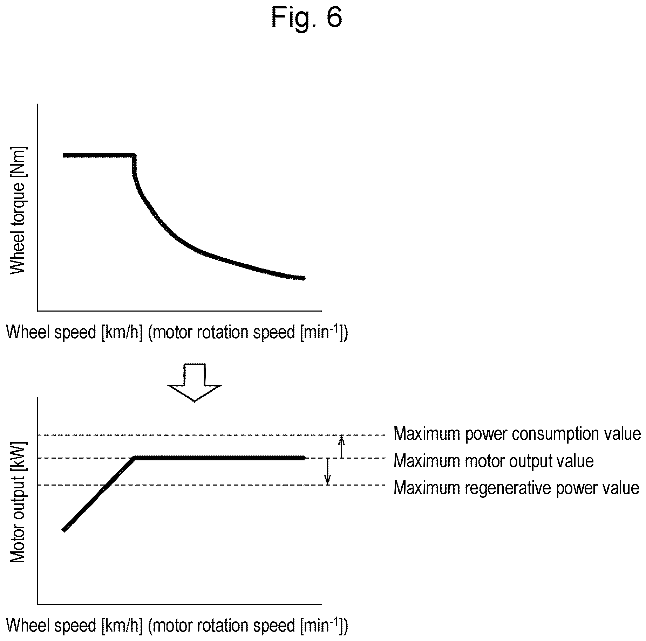

Referring to Fig. 6, the maximum power consumption value and the maximum regenerative power value of the travel motors 9, 10 set in advance in the vehicle control device 11 will be described. Fig. 6 is a diagram explaining the maximum power consumption value and the maximum regenerative power value illustrated in Fig. 5.

As described above, the maximum power consumption value indicates a maximum value of the power consumption consumed by the travel motors 9, 10 during power traveling. The maximum regenerative power value indicates a maximum value of the regenerative power generated by the travel motors 9, 10 during regeneration. The maximum power consumption value and the maximum regenerative power value are parameters that are determined in advance according to the specifications of the dump truck 1 (hereinafter also referred to as "vehicle body specifications") including the specifications of the travel motors 9, 10, and are set in advance in the vehicle control device 11.

The torque table indicating a corresponding relationship between the wheel speed of the dump truck 1 or the rotation speed of the travel motors 9, 10 and the wheel torque of the dump truck 1 is determined according to the vehicle body specifications. The wheel torque can be converted to a motor torque T (unit: N·m) of the traveling motors 9, 10 using a wheel diameter and a reduction ratio of the dump truck 1 and the like. The motor torque T can be converted to a motor output P (unit: kW) according to a motor rotation speed N (unit: min⁻¹) using the conversion formula P = 2πTN/60. Therefore, the torque table (upper part of Fig. 6) can be converted to a motor output table (lower part of Fig. 6) indicating a corresponding relationship between the wheel speed of the dump truck 1 or the rotation speed of the travel motors 9, 10 and the motor output of the travel motors 9, 10. From this motor output table, a maximum value of the motor output (hereinafter also referred to as a "maximum motor output value") that can be determined according to the vehicle body specifications is acquired. The maximum power consumption value can be computed by adding the efficiency of the travel motors 9, 10 and the power conversion efficiency of the inverters 7, 8 onto the maximum motor output value. The maximum regenerative power value can be computed by subtracting the power conversion efficiency of the inverters 7, 8 from the maximum motor output value.

In this way, the maximum power consumption value and the maximum regenerative power value are determined in advance according to the vehicle body specifications and are set in advance in the vehicle control device 11.

As described above, the dump truck 1 of Embodiment 1 includes the battery 2, the travel motors 9, 10 using the battery 2 as a power source, the inverters 7, 8 that generate a driving voltage of the travel motors 9, 10, the DC/DC converter 3 that reduces or increases the input/output voltage of the battery 2, the smoothing capacitor 5 provided between the DC/DC converter 3 and the inverters 7, 8, the battery control device 6 that monitors a state of charge of the battery 2, and the vehicle control device 11 that outputs a torque command value of the travel motors 9, 10 to the inverters 7, 8 to control the driving of the travel motors 9, 10. The battery control device 6 computes a chargeable and dischargeable power of the battery 2 on the basis of the state of charge of the battery 2. The vehicle control device 11 acquires an operation signal corresponding to an acceleration/deceleration operation to the travel motors 9, 10, and computes the torque command value to be output to the inverters 7, 8 on the basis of the acquired operation signal and the chargeable and dischargeable power computed by the battery control device 6.

This allows the vehicle control device 11 to limit the power consumption or the regenerative power of the travel motors 9, 10 to be less than or equal to the chargeable and dischargeable power of the battery 2. Thus, the vehicle control device 11 can prevent the DC circuit 4 from becoming an undervoltage state and prevent the DC circuit 4 from becoming an overvoltage state. Therefore, the dump truck 1 of Embodiment 1 can stabilize the voltage of the DC circuit 4 and prevent a stop of the travel system and damage to a component.

Furthermore, in the dump truck 1 of Embodiment 1, a maximum power consumption value and a maximum regenerative power value of the travel motors 9, 10 are set in advance in the vehicle control device 11. The battery control device 6 computes a dischargeable power and a chargeable power of the battery 2. When the dischargeable power is less than the maximum power consumption value, the vehicle control device 11 limits the torque command value such that the power consumption of the travel motors 9, 10 will not exceed the dischargeable power. When the chargeable power is less than the maximum regenerative power value, the vehicle control device 11 limits the torque command value such that the regenerative power of the travel motors 9, 10 will not exceed the chargeable power.

This allows the vehicle control device 11 to surely limit the power consumption of the travel motors 9, 10 to be less than or equal to the dischargeable power of the battery 2 and the regenerative power of the travel motors 9, 10 to be less than or equal to the chargeable power of the battery 2. Thus, the vehicle control device 11 can surely prevent the DC circuit 4 from becoming an undervoltage state and surely prevent the DC circuit 4 from becoming an overvoltage state. Therefore, the dump truck 1 of Embodiment 1 can surely stabilize the voltage of the DC circuit 4 and surely prevent a stop of the travel system and damage to a component.

Furthermore, in the dump truck 1 of Embodiment 1, a torque table is set in advance in the vehicle control device 11. The vehicle control device 11 specifies the wheel torque corresponding to the wheel speed using the torque table. The vehicle control device 11 computes the torque command value by multiplying the specified wheel torque by a torque rate corresponding to an operation amount of the acceleration/deceleration operation indicated by the operation signal. The vehicle control device 11 limits the torque command value by setting an upper limit of the torque rate on the basis of the dischargeable power of the battery 2 and the maximum power consumption value of the travel motors 9, 10, and setting a lower limit of the torque rate on the basis of the chargeable power of the battery 2 and the maximum regenerative power value of the travel motors 9, 10.

This allows the vehicle control device 11 to surely limit the power consumption of the travel motors 9, 10 to be less than or equal to the dischargeable power of the battery 2 and the regenerative power of the travel motors 9, 10 to be less than or equal to the chargeable power of the battery 2, even without using a special computational logic or algorithm. Therefore, the vehicle control device 11 can surely and easily prevent the DC circuit 4 from becoming an undervoltage state and an overvoltage state. Thus, the dump truck 1 of Embodiment 1 can surely and easily stabilize the voltage of the DC circuit 4 and can surely and easily prevent a stop of the travel system and damage to a component.

### [Embodiment 2]

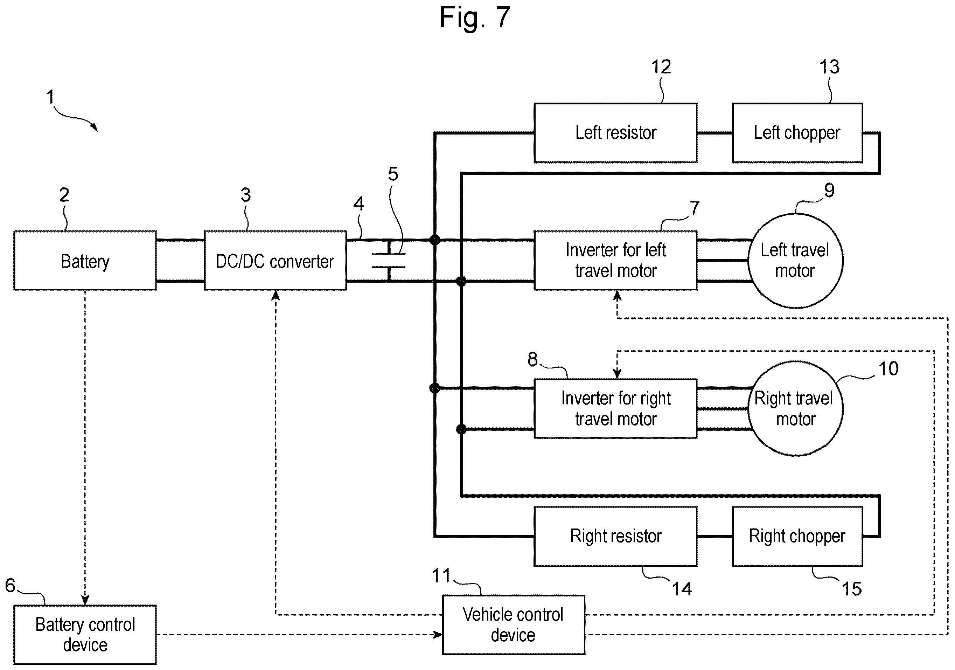

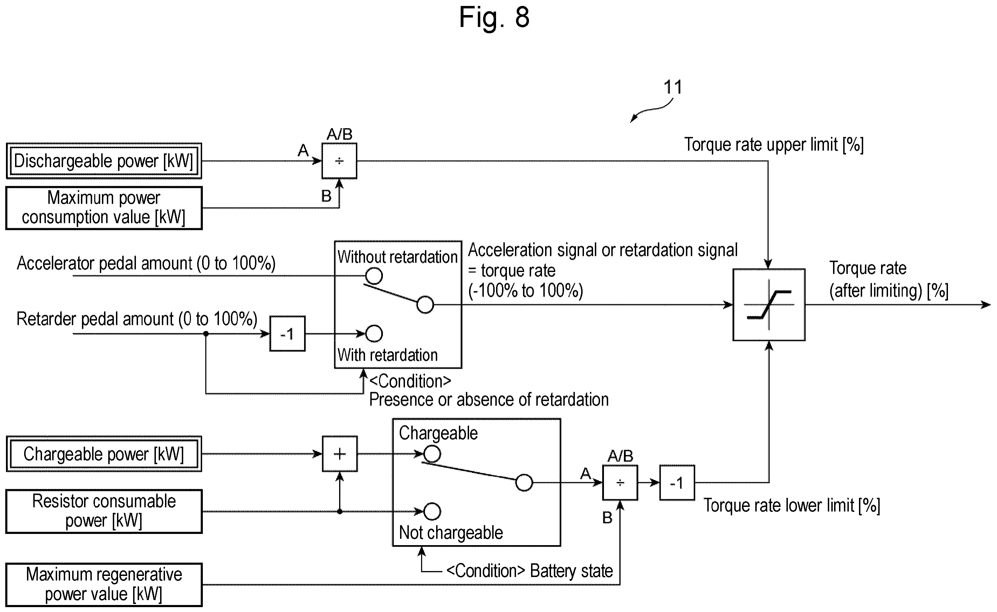

Referring to Fig. 7 and Fig. 8, the dump truck 1 of Embodiment 2 will be described. In the dump truck 1 of Embodiment 2, description of configurations and operations similar to Embodiment 1 will be omitted.

Fig. 7 is a diagram illustrating a configuration of an electric circuit of the dump truck 1 of Embodiment 2. Fig. 8 is a diagram illustrating a computational logic associated with a torque rate of the vehicle control device 11 illustrated in Fig. 7.

As illustrated in Fig. 7, the dump truck 1 of Embodiment 2 includes a left resistor 12 and a left chopper 13 connected in parallel with the inverter 7 for the left travel motor, and a right resistor 14 and a right chopper 15 connected in parallel with the inverter 8 for the right travel motor. That is, the left resistor 12 and the left chopper 13 are connected to the DC circuit 4 between the smoothing capacitor 5 and the inverter 7 for the left travel motor. The right resistor 14 and the right chopper 15 are connected to the DC circuit 4 between the smoothing capacitor 5 and the inverter 8 for the right travel motor.

The vehicle control device 11 of Embodiment 2 controls the DC/DC converter 3 such that the battery 2 charges the regenerative power of the travel motors 9, 10, and controls the choppers 13, 15 such that the resistors 12 consume a surplus power, 14. The choppers 13, 15 supply the regenerative power of the travel motors 9, 10 to the resistors 12, 14 on the basis of control commands from the vehicle control device 11. The resistors 12, 14 convert the supplied regenerative power to heat and consume it.

In the vehicle control device 11 of Embodiment 2, as illustrated in Fig. 8, a resistor consumable power indicating a power that the resistors 12, 14 can consume is set in advance, in addition to the maximum power consumption value and the maximum regenerative power value. The resistor consumable power is a parameter that is determined in advance according to the specifications of the resistors 12, 14 and is set in advance in the vehicle control device 11. The resistor consumable power may be equivalent to a capacitance of the resistors 12, 14.

The vehicle control device 11 of Embodiment 2 sets a lower limit of the torque rate on the basis of the chargeable power computed by the battery control device 6 and the preset maximum regenerative power value and resistor consumable power.

Specifically, the vehicle control device 11 of Embodiment 2 computes, when the battery 2 is in a chargeable state, a lower limit of the torque rate by dividing a total value of the chargeable power computed by the battery control device 6 and the preset resistor consumable power by the preset maximum regenerative power value. The vehicle control device 11 of Embodiment 2 computes, when the battery 2 is in a non-chargeable state, a lower limit of the torque rate by dividing the preset resistor consumable power by the preset maximum regenerative power value. It is noted that the battery 2 being in a non-chargeable state means that the charge rate of the battery 2 is 100%, or the battery 2 or the DC/DC converter 3 and the like are in a state of being unable to be charged due to malfunction.

Now consider the case where, for example, during deceleration of the dump truck 1, the battery 2 is in a healthy state (a state where there is no malfunction and the charge rate is not high) and the chargeable power of the battery 2 is 1900 kW, the resistor consumable power of the resistors 12, 14 is 1800 kW, and the maximum regenerative power value of the travel motors 9, 10 is 2900 kW. In this case, the vehicle control device 11 obtains that the magnitude of the lower limit of the torque rate is {(1900+1800)/2900}×100≈127%. Now consider the case where, for example, during deceleration of the dump truck 1, the charge rate of the battery 2 is in a high state, the chargeable power of the battery 2 is 1000 kW, the resistor consumable power of the resistors 12, 14 is 1800 kW, and the maximum regenerative power value of the travel motors 9, 10 is 2900 kW. In this case, the vehicle control device 11 obtains that the magnitude of the lower limit of the torque rate is {(1000+1800)/2900}×100≈96%. Now consider the case where the battery 2 is in a non-chargeable state due to a malfunction of the DC/DC converter 3 and the chargeable power of the battery 2 is 0 kW, the resistor consumable power of the resistors 12, 14 is 1800 kW, and the maximum regenerative power value of the travel motors 9, 10 is 2900 kW. In this case, the vehicle control device 11 obtains that the magnitude of the lower limit of the torque rate is {(0+1800)/2900}×100≈62%. It is noted that the vehicle control device 11 sets the lower limit of the torque rate to a negative value by multiplying the computed magnitude of the lower limit of the torque rate by -1.

In addition, the vehicle control device 11 of Embodiment 2, like Embodiment 1, computes an upper limit of the torque rate by dividing the dischargeable power computed by the battery control device 6 by the preset maximum power consumption value.

As described above, the dump truck 1 of Embodiment 2 further includes the resistors 12, 14 that are connected between the smoothing capacitor 5 and the inverters 7, 8 and consume the regenerative power of the travel motors 9, 10. In the vehicle control device 11, a resistor consumable power indicating a power that the resistors 12, 14 can consume is set in advance. The vehicle control device 11 sets the lower limit of the torque rate on the basis of the chargeable power of the battery 2, the maximum regenerative power value of the travel motors 9, 10, and the resistor consumable power of the resistors 12, 14.

This allows the vehicle control device 11 to reduce the rate of decrease in the torque command value along the decrease in the chargeable power while limiting the power consumption of the travel motors 9, 10 to be less than or equal to the dischargeable power of the battery 2 and the regenerative power of the travel motors 9, 10 to be less than or equal to the chargeable power of the battery 2. Thus, the vehicle control device 11 can reduce the opportunity to have the chargeable power being less than the maximum regenerative power value, and can reduce the opportunity to limit the torque command value during deceleration. Therefore, the vehicle control device 11 can easily maintain the original regenerative braking performance of the travel motors 9, 10 and can suppress the wear in the mechanical brake of the dump truck 1. This means that the dump truck 1 of Embodiment 2 can stabilize the voltage of the DC circuit 4 and can suppress the running costs of the dump truck 1 while preventing a stop of the travel system and damage to a component.

Furthermore, in the dump truck 1 of Embodiment 2, the vehicle control device 11 computes the upper limit of the torque rate by dividing the dischargeable power of the battery 2 by the maximum power consumption value of the travel motors 9, 10. The vehicle control device 11 computes, when the battery 2 is in a chargeable state, the lower limit of the torque rate by dividing a total value of the chargeable power of the battery 2 and the resistor consumable power of the resistors 12, 14 by the maximum regenerative power value of the travel motors 9, 10. The vehicle control device 11 computes, when the battery 2 is in a non-chargeable state, the lower limit of the torque rate by dividing the resistor consumable power by the maximum regenerative power value.

With the above-described configurations, even if the battery 2 is in a non-chargeable state, the vehicle control device 11 can maintain the regenerative braking performance of the travel motors 9, 10 while limiting the power consumption of the travel motors 9, 10 to be less than or equal to the dischargeable power of the battery 2 and the regenerative power of the travel motors 9, 10 to be less than or equal to the chargeable power of the battery 2. Thus, the vehicle control device 11 can further suppress the wear in the mechanical brake of the dump truck 1. This means that the dump truck 1 of Embodiment 2 can stabilize the voltage of the DC circuit 4 and can further suppress the running costs of the dump truck 1 while preventing a stop of the travel system and damage to a component.

Although the embodiments of the present invention have been described in detail above, the present invention is not limited to the aforementioned embodiments, and various changes are possible in so far as they are within the spirit of the present invention in the scope of the claims. In the present invention, it is possible to add, to a configuration of an embodiment, a configuration of another embodiment, to replace a configuration of an embodiment with a configuration of another embodiment, or to delete a part of a configuration of an embodiment.

### Reference Signs List

- 1: Dump truck
- 2: Battery
- 3: DC/DC converter
- 5: Smoothing capacitor (capacitor)
- 6: Battery control device
- 7, 8: Inverter
- 9, 10: Travel motor
- 11: Vehicle control device
- 12, 14: Resistor

## Claims

1. A dump truck of an electric type according to claim 1, comprising: a battery; a travel motor using the battery as a power source; an inverter configured to generate a driving voltage of the travel motor; a DC/DC converter configured to reduce or increase an input/output voltage of the battery; a capacitor provided between the DC/DC converter and the inverter; a battery control device configured to monitor a state of charge of the battery; and a vehicle control device configured to output a torque command value of the travel motor to the inverter to control driving of the travel motor,
wherein the battery control device computes a chargeable and dischargeable power of the battery on the basis of the state of charge,
wherein the vehicle control device acquires an operation signal corresponding to an acceleration/deceleration operation to the travel motor and computes the torque command value to be output to the inverter on the basis of the acquired operation signal and the chargeable and dischargeable power computed by the battery control device,
wherein a maximum power consumption value that indicates a maximum value of a power consumption consumed by the travel motor during power traveling and a maximum regenerative power value that indicates a maximum value of a regenerative power generated by the travel motor during regeneration are set in advance in the vehicle control device,
wherein the battery control device computes a dischargeable power indicating a power that can be discharged from the battery and a chargeable power indicating a power that can be charged in the battery, and
wherein the vehicle control device is configured to:
when the dischargeable power is less than the maximum power consumption value, limit the torque command value such that the power consumption of the travel motor will not exceed the dischargeable power; and
when the chargeable power is less than the maximum regenerative power value, limit the torque command value such that the regenerative power of the travel motor will not exceed the chargeable power.

2. The dump truck according to claim 1,
wherein a table indicating a corresponding relationship between a wheel speed of the dump truck or a rotation speed of the travel motor and a wheel torque of the dump truck is set in advance in the vehicle control device, and
wherein the vehicle control device is configured to:
specify the wheel torque corresponding to the wheel speed using the table, and compute the torque command value by multiplying the specified wheel torque by a rate corresponding to an operation amount of the acceleration/deceleration operation indicated by the operation signal; and
limit the torque command value by setting an upper limit of the rate on the basis of the dischargeable power and the maximum power consumption value, and setting a lower limit of the rate on the basis of the chargeable power and the maximum regenerative power value.

3. The dump truck according to claim 2, further comprising a resistor that is connected between the capacitor and the inverter and consumes the regenerative power,
wherein in the vehicle control device, a resistor consumable power indicating a power that the resistor can consume is set in advance, and
wherein the vehicle control device sets the lower limit of the rate on the basis of the chargeable power, the maximum regenerative power value, and the resistor consumable power.

4. The dump truck according to claim 3,
wherein the vehicle control device is configured to:
compute the upper limit of the rate by dividing the dischargeable power by the maximum power consumption value;
compute, when the battery is in a chargeable state, the lower limit of the rate by dividing a total value of the chargeable power and the resistor consumable power by the maximum regenerative power value; and
compute, when the battery is in a non-chargeable state, the lower limit of the rate by dividing the resistor consumable power by the maximum regenerative power value.
